# EUROPEAN PATENT APPLICATION

(11) **EP 0 718 792 A1**
(43) Date of publication of application: **26.06.1996**
(21) Application number: 95309357.2
(22) Date of filing: 21.12.1995
(51) Int. Cl.: G06K 11/18

(54) **Ultrasonic wireless controlling device of pointing type**

(30) Priority: 22.12.1994 KR 9435988
(71) Applicant: LG ELECTRONICS INC., Seoul (KR)
(72) Inventor: Kim, Jeong Yeol, Jangahn-ku, Suwon-si, Kyungki-do (KR)
(74) Representative: Cross, Rupert Edward Blount

(57) **Abstract**

Ultrasonic wireless controlling device of a pointing type, including ultrasonic wave emitting means for emitting an ultrasonic signal of a certain frequency, signal receiving and controlling means for receiving the ultrasonic signal by means of a plurality of signal receiving sensors arranged at corners of a rectangular display screen, calculating coordinates of an indicated point from difference of intensity of the received ultrasonic wave, and matching a position of a cursor on the display screen to the indicated point, and position determining means having a received signal intensity determining part for converting intensity of the ultrasonic signals received by each of the receiving sensors into digitized quantitative data, a phase difference determining part for converting phases of the ultrasonic signals received by each of the receiving sensors into digitized quantitative data, and a microprocessor for receiving the quantitative data both from the received signal intensity determining part and the phase difference determining part and calculating coordinates of the indicated point based on the quantitative intensity of the received signal and the digital data of the detected phase difference, for moving the cursor to a designated point on the display screen.

## Description

### BACKGROUND OF THE INVENTION

The present invention relates to an ultrasonic wireless controlling device, more particularly to an ultrasonic wireless controlling device of pointing type, in which an ultrasonic wave emitted from a location is received by sensors provided at the corners of a rectangular display, which are analyzed of their phase differences coming from their differences in intensity to calculate absolute coordinates of a point on the display pointed by the ultrasonic wave presently, for moving a cursor on the display to the point.

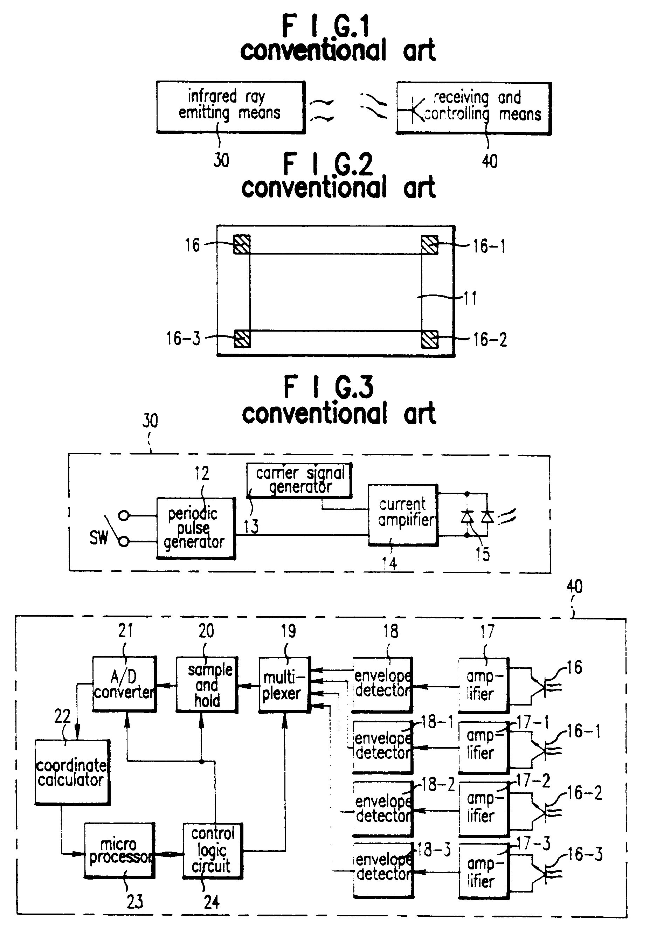

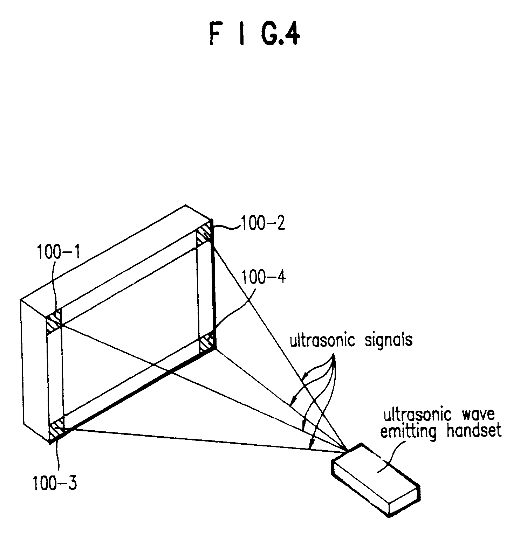

As shown in Figs. 1 and 2, a conventional infrared wireless controlling device includes infrared ray emitting means 30 for emitting an infrared signal of a certain frequency, and receiving and controlling means 40 for receiving the infrared signal with receiving sensors 16 to 16-3 arranged at different points on a display to determine coordinates of a point on the display pointed by the infrared ray by calculating difference of intensity of the infrared signals received by the respective receiving sensors 16 to 16-3, for moving the cursor on the display to the point.

As shown in Fig. 3, the infrared ray emitting means 30 includes a periodic pulse generating part 12 for generating periodic pulses by turning on and off a controlling switch SW, a current amplifying part 14 for amplifying both the periodic pulses received from the periodic pulse generating part 12 and a carrier signal received from a carrier signal generating part 13, and an infrared ray emitting diode 15 for emitting the signals amplified through the current amplifying part 14 into air.

The receiving and controlling means 40, which processes the infrared signal received from the infrared ray emitting means 30, includes a plurality of infrared receiving sensors 16 to 16-3 arranged in the rim of a monitor screen for sensing the infrared signal, a plurality of amplifying parts 17 to 17-3 for amplifying the weak infrared signals received by the infrared receiving sensors respectively, a plurality of envelope detectors 18 to 18-3 each for removing a carrier signal received by respective amplifiers 17 to 17-3 for detecting a level of a light intensity received by respective infrared receiving sensors 16 to 16-3, a multiplexer 19, a sample and hold 20 and an A/D converter 21 in a group connected to output terminals of the plurality of envelope detectors 18 to 18-3 for successive conversion of the levels of light intensity into digital data, a coordinate calculator 22 for receiving data from the A/D converter 21 for calculating coordinates of a point on the display screen pointed presently, a microprocessor 23 for controlling to match the calculated coordinate axes to the display screen for indicating the present point on the screen, and a control logic part 24 for controlling a timing signal required for operation of a system of the microprocessor 23 and the multiplexer 19.

As shown in Figs. 1 and 2, in the conventional infrared wireless controlling device of a pointing type explained above having the infrared receiving sensors 16 to 16-3 provided at the four corners of the display screen 11, upon direction of an infrared signal to any point on the display screen with the infrared emitting means 30, intensity of the infrared ray received by each of the infrared receiving sensors 16 to 16-3 is different.

That is, upon turning on the controlling switch SW in the infrared emitting means 30, the periodic pulse generating part 12 keeps on emitting periodic pulses until the switch SW is turned off, which periodic pulses are applied to the current amplifying part 14, together with a carrier signal generated in the carrier signal generating part 13.

Then, the current amplifying part 14 amplifies the periodic pulses and the carrier signal to levels enough to emit into air, which are then applied to the infrared ray emitting diode 15.

The level amplified signal(an infrared signal) is then emitted by the infrared ray emitting diode 15, which infrared signal is sensed by the infrared receiving sensors 16 to 16-3 that are input terminals of the receiving and controlling means 40 and amplified of their weak levels again by the amplifiers 17 to 17-3 connected to respective infrared receiving sensors 16 to 16-3 at their output terminals thereof.

The signals amplified by the amplifiers 17 to 17-3 are removed of their carrier signals by the envelope detectors 18 to 18-3 each connected to respective output terminals of the amplifiers 17 to 17-3, for detecting levels of intensity of each of the infrared rays received by the infrared receiving sensors 16 to 16-3 only.

Accordingly, each of the intensity levels of the infrared rays are converted into digital data successively through the multiplexer 19, the sample and hold 20 and the A/D converter 21, and applied to the coordinate calculator 22, wherein coordinates of the position on the display screen 11 pointed presently is calculated.

On receiving the calculated coordinates of the position on the display screen, the microprocessor 23 controls a position of a cursor displayed on the display screen to be matched to the calculated coordinates to display the point pointed presently on the screen.

The unexplained control logic part 24 provides the microprocessor 23 and the multiplexer 19 with a timing clock required for operation of the systems.

However, since the operation of the conventional infrared wireless controlling device of a pointing type is of a relative coordinate calculation type similar to the operation of a desk top mouse in which a movement of a cursor corresponds to a movement of a track ball in the mouse, that allows a user to move the cursor to a desired position on a display screen, but does not allow the user to move the cursor to the desired position on the display screen in absolute coordinate basis that permits the user to move to the desired position directly, use of the conventional infrared wireless controlling device of a pointing type can not but be limited. Moreover, the non-correction of phase errors in case of a wireless type in which the infrared receiving parts are built-in the set causes a problem in that a user desired coordinates can not be obtained accurately.

### SUMMARY OF THE INVENTION

Accordingly embodiments of the present invention designed for solving aforementioned problems provide an ultrasonic wireless controlling device of a pointing type, in which the intensity and phases of an ultrasonic wave directed onto a display screen from a location and sensed by a plurality of sensors provided at the corners of the screen whereon a cursor is presently displayed are determined by means of comparators and time counters, which are analyzed and calculated into absolute coordinates by means of a microprocessor, for matching the cursor on the display screen to the coordinates of a designated point.

In one aspect of the present invention, there is provided an ultrasonic wireless controlling device of a pointing type, including ultrasonic wave emitting means for emitting an ultrasonic signal of a certain frequency, signal receiving and controlling means for receiving the ultrasonic signal by means of a plurality of signal receiving sensors arranged at corners of a rectangular display screen, calculating coordinates of an indicated point from difference of intensity of the received ultrasonic wave, and matching a position of a cursor on the display screen to the indicated point, and position determining means having a received signal intensity determining part for converting intensity of the ultrasonic signals received by each of the receiving sensors into digitized quantitative data, a phase difference determining part for converting phases of the ultrasonic signals received by each of the receiving sensors into digitized quantitative data, and a microprocessor for receiving the quantitative data both from the received signal intensity determining part and the phase difference determining part and calculating coordinates of the indicated point based on the quantitative intensity of the received signal and the digital data of the detected phase difference, for moving the cursor to a designated point on the display screen.

### BRIEF DESCRIPTION OF THE DRAWINGS

Fig. 1 illustrates a block diagram of a conventional wireless controlling device.

Fig. 2 illustrates an example of conventional infrared receiving sensors arranged on a monitor screen.

Fig. 3 illustrates a block diagram of a conventional infrared wireless controlling device of a pointing type.

Fig. 4 illustrates a schematic perspective view of an ultrasonic wireless controlling device of a pointing type embodying the present invention.

Fig. 5 illustrates a block diagram of a system of the ultrasonic wireless controlling device of a pointing type embodying the present invention.

Fig. 6 illustrates a block diagram of a system of the ultrasonic wave emitting handset.

Figs. 7a to 7r illustrate wave patterns at various parts of the ultrasonic wireless controlling device of a pointing type embodying the present invention.

### DETAILED DESCRIPTION OF THE PREFERRED EMBODIMENTS

An ultrasonic wireless controlling device of a pointing type in accordance with one preferred embodiment of the present invention will now be explained in detail with reference to the attached drawings.

The ultrasonic wireless controlling device of a pointing type in accordance with one preferred embodiment of the present invention includes ultrasonic wave emitting means for emitting an ultrasonic wave, display means for displaying various menu, and signal receiving and position determining means for receiving the ultrasonic wave at locations in the periphery of the display means, converting intensity and phase of each of the received ultrasonic wave signals into digitized quantitative data, calculating coordinates of a point pointed by the ultrasonic wave based on the digitized quantitative data, and moving a cursor on a screen of the display means to the calculated coordinate point.

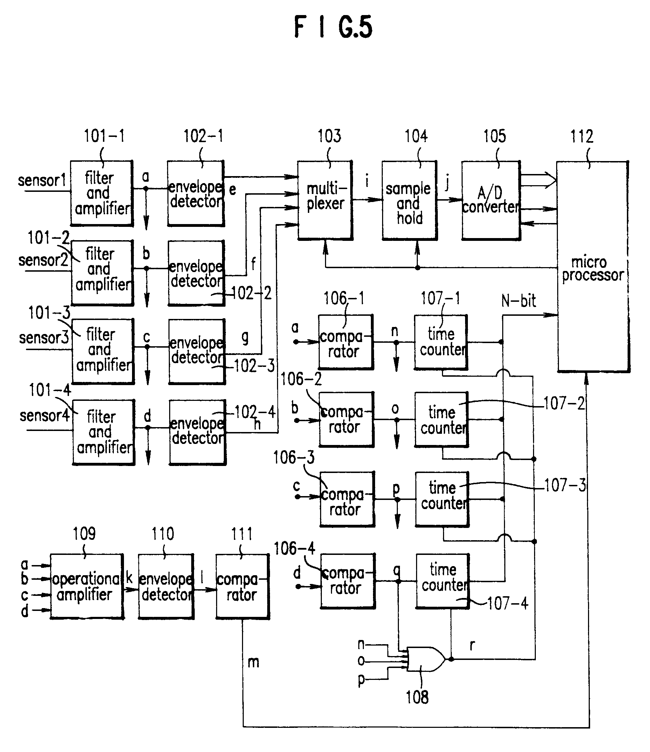

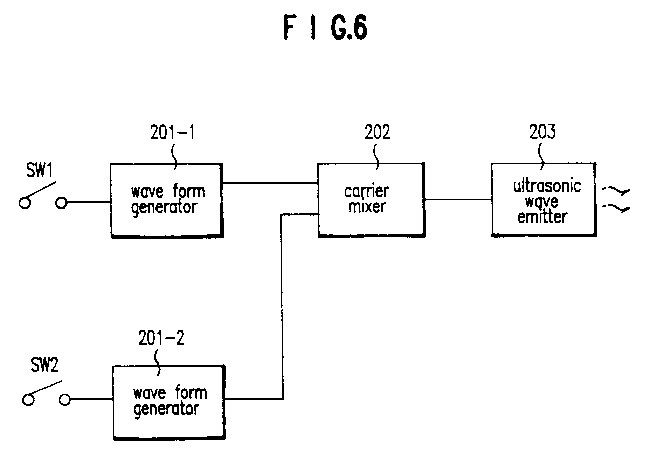

As shown in Figs. 5 and 6, the ultrasonic wireless controlling device of a pointing type having aforementioned system includes waveform generators 201-1 and 201-2 each for generating a pulse waveform on turning on and off of the respective controlling switches SW1 and SW2, a carrier mixer 202 for mixing the pulse waveforms generated in each of the waveform generators 201-1 and 201-2, an ultrasonic wave emitter 203 for receiving the mixed pulse waveform from the waveform generator 202 for emitting an ultrasonic wave into air, ultrasonic signal receiving sensors 100-1 to 100-4 arranged at parts in the rim of the monitor screen for sensing the emitted ultrasonic wave, filter and amplifiers 101-1 to 101-4 for filtering and amplifying the received ultrasonic waves from the ultrasonic signal receiving sensors 100-1 to 100-4 respectively, envelope detectors 102-1 to 102-4 for sensing levels of the ultrasonic waves from the filter and amplifiers 101-1 to 101-4 respectively, a multiplexer 103, a sample and hold 104, and an A/D converter 105 connected in series for serial conversion of the levels of the ultrasonic waves, which correspond to intensity of the ultrasonic wave, received from the envelope detectors 102-1 to 102-4 into digital data, a plurality of comparators 106-1 to 106-4 for detecting phases of the ultrasonic waves from the filter and amplifiers 101-1 to 101-4 respectively, an OR gate 108 for logical summing of the phases from the comparators 106-1 to 106-4, a plurality of time counters 107-1 and 107-4 for counting difference of the phases from the plurality of comparators 106-1 to 106-4 and the phase from the OR gate 108 for producing the difference into N-bit time data respectively, an operational amplifier 109 for summing the phases from the plurality of filter and amplifiers 101-1 to 101-4, an envelope detector 110 for detecting a level of the ultrasonic wave from the operational amplifier 109, a comparator 111 for comparing the level from the envelope detector 110 to a preset arbitrary value for determining the level of being a pulse signal for moving the cursor or a pulse signal from a selection button, and a microcomputer 112 for calculating both the intensity of the digitized signal from the A/D converter 105 and the phases of the digitized signals from each of the time counters 107-1 to 107-4 for determining coordinates of the point pointed by the ultrasonic wave, moving the cursor on the display screen to the calculated coordinate point, and detecting an output of the comparator 111 for determining of the output being a cursor movement or a button selection.

The operation of the ultrasonic wireless controlling device of a pointing type having aforementioned system will be explained, assuming that the ultrasonic signal receiving sensors 100-1 to 100-4 are provided at the four corners of the display screen, and the ultrasonic wave emitted from the ultrasonic wave emitting handset is directed onto the display screen.

After passing through the filter and amplifiers 101-1 to 101-4 respectively, each of the signals received through respective ultrasonic signal receiving sensors 100-1 to 100-4 is applied both to a block provided for utilizing difference of intensity of the ultrasonic waves and a block provided for utilizing difference of phases of the ultrasonic waves on the same time.

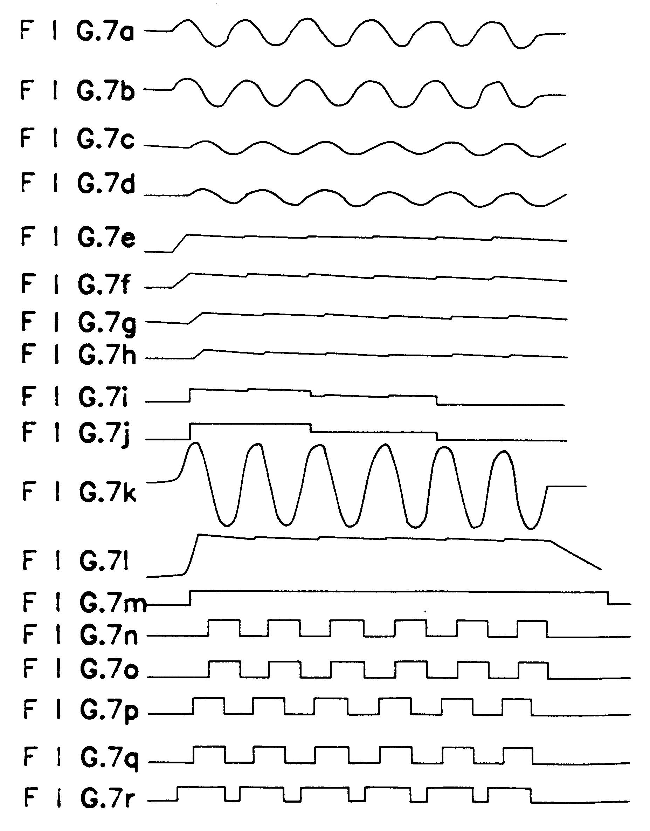

The waveforms shown in Figs. 7a to 7r represent waveforms at different parts of the device formed when the ultrasonic wave emitting handset is directed to a point at a right center of the ultrasonic signal receiving sensors 100-1 and 100-2.

Referring to the waveforms shown in Figs. 7a to 7r, signals with the waveforms of Figs. 7a to 7d after the filter and amplifiers 101-1 to 101-4 respectively pass through respective envelope detectors 102-1 to 102-4 to become the waveforms as shown in Figs. 7e to 7h, which pass through the multiplexer 103 and the sample and hold 104 in series to become the waveforms as shown in Figs. 7i to 7j, that are applied to the A/D converter 105.

The A/D converter 105 converts intensity of the ultrasonic waves from the ultrasonic signal receiving sensors 100-1 to 100-4 into digitized quantitative data required for the microprocessor 112 in calculation of coordinates of a point.

And, difference of each of the phases of signals with the waveforms as shown in Figs. 7n to 7q after the comparators 106-1 to 106-4 and the filter and amplifiers 101-1 to 101-4 respectively from the phase of a signal from the OR gate 108 which is a logical sum of the signals with the waveforms as shown in Figs. 7n to 7q, is measured in respective time counters 107-1 to 107-4, applied to the microprocessor 112, for converting difference of phases of the ultrasonic waves received from each of the receiving sensors required for calculation of absolute coordinates into quantitative digitized data.

In the meantime, since signals from the filter and amplifiers 101-1 to 101-4 pass through the operational amplifier 109, a signal with a waveform as shown in Fig. 7k passed through the envelope detector 110 and the comparator 111 sequentially becomes signals with the waveforms as shown in Figs. l and m, which are applied to the microprocessor 112, for determining of the pulse from the handset of being a pulse for moving the cursor or a pulse by a selection button.

Using these intensity, phase difference, and forms of pulses of the ultrasonic waves received from the ultrasonic signal receiving sensors, the microprocessor 112 calculates relative difference of intensity, phase difference, average value, rate of distribution, and standard deviation, of the ultrasonic waves for linearizing non-linear characteristics of the received ultrasonic beam and compensating for the difference of distances, whereby the microprocessor 112 can finally calculate absolute coordinates of the point pointed by the handset presently.

By moving a position of the cursor on the display screen to the calculated coordinates of a point, a point pointed by the handset and the position of the cursor can be matched.

As has been explained, the ultrasonic wireless controlling device of a pointing type of the present invention, including ultrasonic wave emitting means for emitting an ultrasonic signal of a certain frequency, signal receiving and controlling means for receiving the ultrasonic signal by means of a plurality of signal receiving sensors arranged at corners of a rectangular display screen, calculating coordinates of an indicated point from difference of intensity of the received ultrasonic wave, and matching a position of a cursor on the display screen to the indicated point, and position determining means having a received signal intensity determining part for converting intensity of the ultrasonic signals received by each of the receiving sensors into digitized quantitative data, a phase difference determining part for converting phases of the ultrasonic signals received by each of the receiving sensors into digitized quantitative data, and a microprocessor for receiving the quantitative data both from the received signal intensity determining part and the phase difference determining part and calculating coordinates of the indicated point based on the quantitative intensity of the received signal and the digital data of the detected phase difference, for moving the cursor to a designated point on the display screen, whereby, using intensity of the ultrasonic signal emitted from a location of the ultrasonic wave emitting handset and the difference of phases of the signal receiving sensors, absolute coordinates of a point pointed by the handset are calculated, allowing to obtain the pointed coordinates.

Accordingly, since the ultrasonic wireless controlling device of a pointing type having a plurality of ultrasonic signal receiving sensors provided at the corners of a display whereon a cursor is at display calculates absolute coordinates of a point pointed by an ultrasonic wave emitting handset from a location by means of the microprocessor using intensity and difference of phases of an ultrasonic wave from the handset, the ultrasonic wireless controlling device can overcome the problems of the existing relative coordinate calculation type, and by the addition of an ultrasonic wave emitter to the ultrasonic wave emitting handset, allows to obtain a full wireless type wireless controlling device of a pointing type.

Although the present invention employs an ultrasonic wave to a wireless controlling device of a pointing type, since substitutions for the device employing other frequency bands or polarizing filters are possible, the present invention is not limited to the disclosed embodiment in this specification, but embraces all the variations.

## Claims

1. An ultrasonic wireless controlling device of a pointing type comprising:
ultrasonic wave emitting means for emitting an ultrasonic signal of a certain frequency;
signal receiving and controlling means for receiving the ultrasonic signal by means of a plurality of signal receiving sensors arranged at corners of a rectangular display screen, calculating coordinates of an indicated point from difference of intensity of the received ultrasonic wave, and matching a position of a cursor on the display screen to the indicated point; and,
position determining means including,
a received signal intensity determining part for converting intensity of the ultrasonic signals received by each of the receiving sensors into digitized quantitative data,
a phase difference determining part for converting phases of the ultrasonic signals received by each of the receiving sensors into digitized quantitative data, and
a microprocessor for receiving the quantitative data both from the received signal intensity determining part and the phase difference determining part and calculating coordinates of the indicated point based on the quantitative intensity of the received signal and the digital data of the detected phase difference, for moving the cursor to a designated point on the display screen.

2. The device as claimed in claim 1,
wherein the position determining means further includes a signal determining means for determining the ultrasonic signal from the ultrasonic wave emitting means of being a signal for moving the cursor or a signal for selecting a menu.
